# EUROPEAN PATENT APPLICATION

(11) **EP 1 487 045 A1**
(43) Date of publication of application: **15.12.2004**
(21) Application number: 04012131.1
(22) Date of filing: 21.05.2004
(51) Int. Cl.: H01M 8/04, H01M 8/10

(54) **Water supply system for fuel cell**

(30) Priority: 09.06.2003 JP 2003163524; 07.10.2003 JP 2003348391
(71) Applicant: NISSAN MOTOR CO., LTD., Yokohama-shi Kanagawa-ken (JP)
(72) Inventor: Sakakida, Akihiro, Yokosuka-shi Kanagawa-ken (JP); Yamazaki, Tsutomu, Yokosuka-shi Kanagawa-ken (JP); Asai, Akihiro, Yokosuka-shi Kanagawa-ken (JP)
(74) Representative: Grünecker, Kinkeldey, Stockmair & Schwanhäusser Anwaltssozietät

(57) **Abstract**

A water supply system for a fuel cell, which includes: a water storage tank; a pump which is located above a water level in the tank and supplies water to the fuel cell; a first passage from the pump to the fuel cell, which has a first portion placed in a position below a discharge port of the pump; an air compressor which supplies air to the tank and the first passage;a second passage which is connected to the first portion of the first passage and opened to the atmosphere; a valve provided on the second passage, which discharges water remaining in either the pump or the first passage through the second passage; and a controller for controlling the valve, which opens the valve as the water supply to the fuel cell is stopped.

## Description

### BACKGROUND OF THE INVENTION

### FIELD OF INVENTION

The present invention relates to a water supply system of a vehicle-mounted system, particularly to a water supply system of a fuel-cell system mounted on a fuel-cell vehicle, which supplies water for moistening the fuel cell internals, humidifying gases to be fed to the fuel cells, or cooling the fuel cells.

### DESCRIPTION OF RELATED ART

Generally, a fuel-cell system uses water for moistening polymer electrolyte membranes of a fuel-cell stack thereof and/or for cooling the fuel-cell stack, and has a water supply system which supplies moistening and/or cooling water to the fuel-cell stack and recovers the water from the fuel-cell stack to reuse it. The water supply system consists of a water storage tank, a water circulating pump, piping and the like. If the system stands below freezing after the operation stops, the water remaining in the system may become frozen, causing seizing/locking of the pumps or breakage of the piping.

As a countermeasure for the freezing, when starting the system, pump priming is applied to the water circulating pump by pressurizing the water storage tank and opening valves downstream the pump to open the system to the atmosphere.

Japanese Patent Application Laid-open Publication No. 9-147892 discloses a fuel-cell system including a fuel-cell unit, a tank for storing cooling water, piping connected to the fuel-cell unit and the tank, a water circulating pump for circulating the cooling water in the system, and means for recovering the cooling water remaining in the system to the tank when the water circulating pump is stopped.

### SUMMARY OF THE INVENTION

In the above-mentioned fuel-cell system, water remaining within a control valve for priming may drop into a pump section during running. If the water becomes frozen, a malfunction may occur next time the pump starts.

The present invention was made in the light of this problem. An object of the present invention is to provide a water supply system for a fuel cell with a reduced possibility of pump locking.

An aspect of the present invention is a water supply system for a fuel cell comprising: a tank for storing water; a pump located above a water level in the tank, for supplying water to the fuel cell; a first passage from the pump to the fuel cell, the first passage having a first portion placed in a position below a discharge port of the pump; an air supplying device for supplying air to the tank and the first passage; a second passage connected at one end thereof to the first portion of the first passage and opened to the atmosphere at the other end thereof; a valve provided on the second passage, for discharging water remaining within at least either the pump or the first passage through the second passage; and a controller for controlling the valve, wherein the controller opens the valve as the water supply to the fuel cell is stopped.

### BRIEF DESCRIPTION OF THE DRAWINGS

The invention will now be described with reference to the accompanying drawings wherein:
FIG. 1 is a block diagram of a fuel-cell system FCS1 according to a first embodiment of the present invention, which includes a water supply system HS;
FIG. 2 is a flowchart showing an operation of the fuel-cell system FCS1 at the time of starting the water supply system HS;
FIG. 3 is a flowchart showing an operation of the fuel-cell system FCS1 at the time of stopping the water supply system HS;
FIG. 4 is a block diagram of a fuel-cell system FCS2 according to a second embodiment of the present invention;
FIG. 5 is a block diagram of a fuel-cell system FCS3 according to a third embodiment of the present invention; and
FIG. 6 is a flowchart showing an operation of the fuel-cell system FCS3 at the time of starting the water supply system HS.

### DETAILED DESCRIPTION OF THE PREFERRED EMBODIMENT

Embodiments of the present invention will be explained below with reference to the drawings, wherein like members are designated by like reference characters.

In the embodiments, the invention is applied, for example, to a water supply system (or a moistening system) of a direct hydrogen fuel-cell system mounted on a fuel-cell vehicle. The fuel-cell system has a fuel-cell stack generating power for driving loads, such as a vehicle drive motor and auxiliary equipment, thereby providing drive torque for running. The invention may be applied to a water supply system for a fuel-cell system including a reformer system.

### [First embodiment]

### [Configuration of fuel-cell system FCS1]

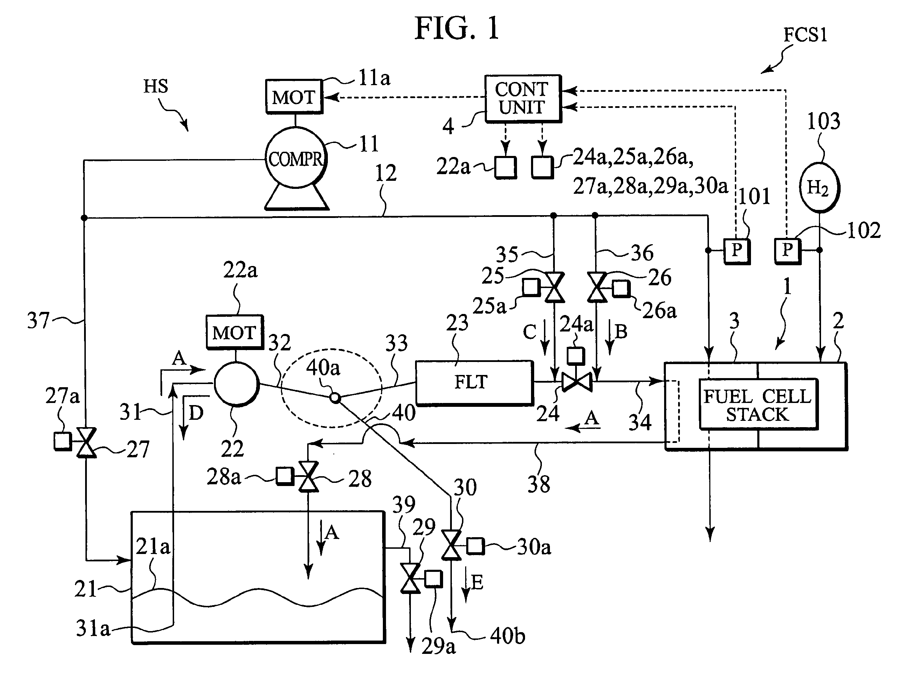

As shown in FIG. 1, a fuel-cell system FCS1 includes a fuel-cell stack 1 as a main power source thereof, which generates power through electrochemical reaction between fuel gas containing high concentration of hydrogen, and an oxidant gas containing oxygen. The fuel-cell stack 1 is formed of a plurality of fuel-cells stacked on one another, each of which consists of a membrane electrode assembly (MEA) and a pair of separators sandwiching MEA therebetween. Each of MEAs consists of an anode 2 (hydrogen electrode) to be supplied with fuel gas, a cathode 3 (air electrode) to be supplied with oxidant gas, a high polymer electrolyte membrane sandwiched between the anode 2 and the cathode 3. Hydrogen (H₂) contained in the supplied fuel gas frees electrons at the anode 2 to form two protons (H⁺) . The protons diffuse through the electrolyte membrane and at the cathode 3 react with the electrons and oxygen (O₂) in the supplied oxidant gas to form water (H₂O). This provides an electric current in an external circuit between the anode 2 and the cathode 3.

The fuel-cell system FCS1 also includes a control unit 4 for controlling parts/components of the system to thereby control the power generating reaction in the fuel-cell stack 1. In the control unit 4, programs of procedures for starting the fuel-cell system FCS1 and for supplying power to the loads are stored in a storage unit such as a ROM (read only memory) (not shown). The control unit 4 reads signals from various sensors in the system, executes the starting program by CPU (central processing unit) (not shown) or the like, and sends control commands to the respective parts/components of the system.

In the fuel-cell system FCS1, a compressor 11 is provided as an air supplying device which takes outside air into the system. The air is compressed by the compressor 11, and supplied as an oxidant gas to the fuel-cell stack 1 through a main air supply line 12. In response to a request for the fuel-cell stack 1 to generate power, the control unit 4 controls a compressor motor 11a which drives the compressor 11 to control the air flow rate and air pressure. The control unit 4 reads a sensor signal from a pressure sensor 101 provided on the main air supply line 12 near an inlet of the cathode 3, and depending on the sensor signal, controls the air flow rate and the air pressure to provide proper air pressure at the cathode 3 for a load condition. The air supplied to the fuel-cell stack 1 is used for power generating reaction in the fuel-cell stack 1, and unused air is discharged from the fuel-cell stack 1.

Hydrogen is supplied as the fuel gas to the fuel-cell stack 1 by a hydrogen supply system 103 including a high-pressure hydrogen storage tank. The control unit 4 reads a sensor signal from a pressure sensor 102 provided on a hydrogen supply line near an inlet of an anode 2, and depending on the sensor signal, controls the hydrogen flow rate and hydrogen pressure to provide proper hydrogen pressure at the anode 2 for a load condition. The hydrogen supplied to the fuel-cell stack 1 is used for power generating reaction in the fuel-cell stack 1.

The fuel-cell system FCS1 includes a water supply system (moistening system) HS which supplies water for moistening solid high polymer electrolyte membranes of the fuel-cell stack 1.

Specifically, the water supply system HS includes a water storage tank 21 which stores water to be used for moistening the fuel-cell stack 1, a water circulating pump 22 which is driven by a pump motor 22a and circulates water through the system HS, a filter 23 which eliminates contaminants in the water, and a plurality of first to seventh control valves 24 to 30 which are controlled to be opened or closed by the control unit 4.

Water stored in the water storage tank 21 is sucked by the water circulating pump 22 and supplied to the fuel-cell stack 1 through piping. A suction line 31 between the water circulating pump 22 and the water storage tank 21 has a suction port 31a at the upstream end thereof, which is set under the surface of the water stored in the water storage tank 21.

During normal operation, the water circulating pump 22 pumps water from the water storage tank 21 in an amount required for an output of the fuel-cell stack 1 and the like, and circulates water in the direction indicated by the arrow A of FIG. 1. If the water circulating pump 22 and the suction line 31 are not filled with water, the water circulating pump 22 cannot suck the water up. Priming is necessary for the pump 22 to start pumping, as will be described later.

The water circulating pump 22 is located above water level 21a in the water storage tank 21. This configuration allows water remaining within the water circulating pump 22 and the suction line 31 to drop and return to the water storage tank 21 when the system HS is stopped. Disadvantageous factors for the water circulating pump 22 to operate in a below freezing condition are thus eliminated from the water supply system HS. Water discharged from the water circulating pump 22 is sent to the filter 23 through lines 32 and 33 which connect the water outlet of the water circulating pump 22 to the filter 23.

The filter 23 is provided on the side of the water inlet of the fuel-cell stack 1 and on the side of the water outlet of the water circulating pump 22. The filter 23 has a resin filter (not shown) therein to remove contaminants in the water. Water is supplied, after contaminants thereof are removed by the filter 23, to the fuel-cell stack 1 via a line 34 which connects the filter 23 to the water inlet of the fuel-cell stack 1.

The first control valve 24 provided on the line 34 is opened or closed by an actuator 24a which is controlled by the control unit 4. Specifically, controlled by the control unit 4, the first control valve 24 is opened at a predetermined valve opening during normal operation, and the first control valve 24 is closed during the stopping of operation in order to drain water remaining in the fuel-cell stack 1, the water circulating pump 22 and the filter 23, introducing compressed air from the compressor 11, and recover water to the water storage tank 21.

The second control valve 25 is provided on a line 35 branched from the main air supply line 12 which connects the compressor 11 to the fuel-cell stack 1, and connected to the line 34 between the filter 23 and the first control valve 24.

The second control valve 25 is opened or closed by an actuator 25a which is controlled by the control unit 4. Specifically, controlled by the control unit 4, the second control valve 25 is closed during normal operation, and the second control valve 25 is opened at a predetermined valve opening during the stopping of operation in order to drain water remaining in the water circulating pump 22 and the filter 23, introducing compressed air from the compressor 11 via the line 35, and recover water to the water storage tank 21.

The third control valve 26 is provided on a line 36 which is branched from the main air supply line 12 and connected to the line 34 between the first control valve 24 and the fuel-cell stack 1.

The third control valve 26 is opened or closed by an actuator 26a which is controlled by the control unit 4. Specifically, controlled by the control unit 4, the third control valve 26 is closed during normal operation, and the third control valve 26 is opened at a predetermined valve opening during the stop of operation in order to drain water remaining in the fuel-cell stack 1, introducing compressed air from the compressor 11 via the line 36, and recover water to the water storage tank 21.

The fourth control valve 27 is provided on an air supply line 37 which is branched from the main air supply line 12, and connects the compressor 11 to the water storage tank 21.

The fourth control valve 27 is opened or closed by an actuator 27a which is controlled by the control unit 4. Specifically, controlled by the control unit 4, the fourth control valve 27 is opened at a predetermined valve opening at the time of starting the system in order to supply priming water to the water circulating pump 22.

The fifth control valve 28 is provided on a line 38 which connects the fuel-cell stack 1 to the water storage tank 21.

The fifth control valve 28 is opened or closed by an actuator 28a which is controlled by the control unit 4. Specifically, controlled by the control unit 4, the fifth control valve 28 is usually opened at a predetermined valve opening to allow water to circulate in the system in the direction indicated by the arrow A of FIG. 1.

The sixth control valve 29 is provided on an air/water discharge line 39 connected to the water storage tank 21, and the sixth control valve 29 is opened or closed by an actuator 29a which is controlled by the control unit 4. Specifically, the sixth control valve 29 is closed at the time of starting the system in order to send priming water to the water circulating pump 22, and maintained closed during operation. The sixth control valve 29 is opened to discharge water within the water storage tank 21 via the air/water discharge line 3

The seventh control valve 30 is provided on a discharge line 40 which is connected at a communication port 40a to the lines 32 and 33 between the water circulating pump 22 and the filter 23, and has an opening 40b to the atmosphere at an end thereof. The discharge line 40 is arranged below the water circulatingpump 22 in a manner that the elevation of the discharge line 40 becomes lower as the discharge line 40 extends from the communication port 40a to the opening 40b. The seventh control valve 30 is thus located below the water circulating pump 22.

The seventh control valve 30 is opened or closed by an actuator 30a which is controlled by the control unit 4. Specifically, controlled by the control unit 4, the seventh control valve 30 is opened at a predetermined valve opening at the time of starting the system in order to supply priming water to the water circulating pump 22, and closed during normal operation. The seventh control valve 30 is opened at a predetermined valve opening during the stopping of operation in order to drain water remaining in the piping near the water circulating pump 22 and the filter 23, introducing compressed air from the compressor 11 via the line 35.

### [Operation of the water supply system HS]

The water supply system HS performs the following operation, in which the compressor 11 supplies compressed air to the water storage tank 21 to apply air pressure thereto, thereby supplying priming water to the water circulating pump 22, or discharging water remaining in parts/components of the system including the fuel-cell stack 1.

### [Operation of the water supply system HS at the time of starting the system]

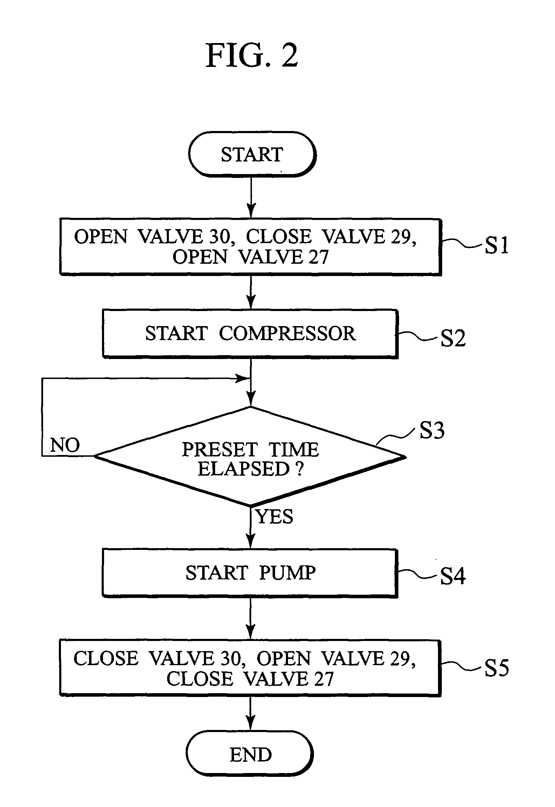

The description will be given with reference to a flowchart of FIG. 2 with regard to how the water supply system HS commences water supply to the fuel-cell stack 1.

In step S1, the control unit 4 first performs control so that the fourth, sixth and seventh control valves 27, 29 and 30 are opened, closed and opened, respectively. In step S1, the control valves 24, 28, 25 and 26 are kept in a closed state.

In next step S2, under the control of the control unit 4, the compressor 11 starts supplying air to the water storage tank 21 via the air supply line 37 and the fourth control valve 27 and thus air pressure is applied to the water storage tank 21. In this state, the water supply system HS operates to open the seventh control valve 30 and close the sixth control valve 29 so that the air supply line 37, the water storage tank 21 and the suction line 31 on the suction side of the water circulating pump 22 are pressurized higher than the line 32 and the discharge line 40 on the water discharge side of the water circulating pump 22.

In next step S3, the control unit 4 determines whether or not a predetermined time has elapsed from the time of starting the compressor 11 in step S2. As employed herein, the predetermined time refers to the time which has elapsed before the pressure of the suction side of the water circulating pump 22 is above the water discharge side of the water circulating pump 22 and thus the supply of priming to the water circulating pump 22 is completed. After a lapse of the predetermined time, the water supply system HS thus enters the following state where the supply of priming from the water storage tank 21 to the water circulating pump 22 is completed, and the water circulating pump 22 can suck up the water.

In next step S4, under the control of the control unit 4, the water circulating pump 22 is started. Thus, the water supply system HS enters the following state: water in the water storage tank 21 is to be supplied to the fuel-cell stack 1, so that the system can shift to normal operation.

In next step S5, the control unit 4 performs control so that the fourth, sixth and seventh control valves 27, 29 and 30 are changed from the controlled states in step S1 into closed, opened and closed states, respectively. In step S5 , the control unit 4 performs control so that the control valves 24 and 28 are opened.

### [Operation of the water supply system HS at the time of stopping the system]

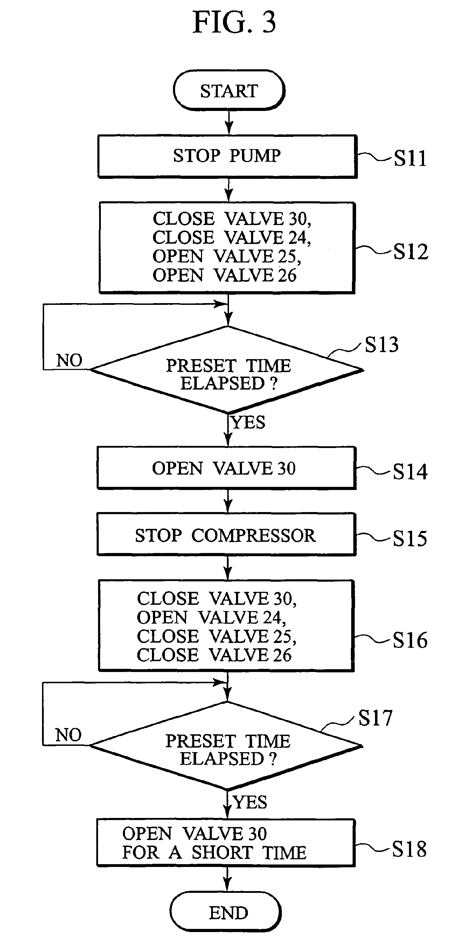

Next, the description is given with reference to a flowchart of FIG. 3 with regard to how the water supply system HS operates to stop when stopping the supply of water to the fuel-cell stack 1.

The water supply system HS operates in the following manner. In step S11, the control unit 4 first performs control so as to stop the water circulating pump 22.

In next step S12, under the control of the control unit 4, water within the fuel-cell stack 1, the filter 23 and the water circulating pump 22 is discharged and recovered to the water storage tank 21. Specifically, the control unit 4 performs control so that the first, third, second and seventh control valves 24, 26, 25 and 30 are closed, opened, opened and closed, respectively, while the compressor 11 is in an operative state.

Thus, in the water supply system HS, air flows from the compressor 11 in the direction indicated by the arrow B of FIG. 1, so that air is introduced into the fuel-cell stack 1 via lines 36 and 34. In the water supply system HS, air pressure from the compressor 11 is used to discharge water within the fuel-cell stack 1 through the first control valve 24 via line 38 in the direction indicated by arrow A of FIG. 1 and then recover water to the water storage tank 21.

In the water supply system HS, the closing and opening of the first and second control valves 24 and 25, respectively, allows air to flow from the compressor 11 in the direction indicated by arrow C of FIG. 1, thereby introducing air into the filter 23 and the water circulating pump 22 via line 35. In the water supply system HS, air pressure from the compressor 11 is used to discharge water within the filter 23 and the water circulating pump 22 in the direction indicated by arrow D of FIG. 1 and recover water to the water storage tank 21.

In next step S13, the control unit 4 determines whether or not a predetermined time has elapsed after the time of control of the control valves 24, 25, 26 and 30 in step S12. Sufficient time to discharge water within the fuel-cell stack 1, the filter 23 and the water circulating pump 22 is previously set as the predetermined time.

In next step S14, the control unit 4 performs control so that the seventh control valve 30 is temporarily opened. This allows the water supply system HS to discharge water remaining in the piping and the like near the water circulating pump 22 and the filter 23 via the discharge line 40 in the direction indicated by arrow E of FIG. 1.

The discharge line 40 is located below the water circulating pump 22 as the discharge line 40 extends from the communication port 40a and approaches to the position of the seventh control valve 30. This enables the water supply system HS to easily discharge water within the line.

The communication port 40a is provided on lines 32 and 33 which connect the discharge side of the water circulating pump 22 to the filter 23. This allows the water supply system HS to avoid situations where hard-to-discharge water within the filter 23 flows into the water circulating pump 22.

The filter 23 is located above the communication port 40a. This permits the water supply system HS to improve the drainage of the filter 23. Similarly, the water circulation pump 22 is also located above the communication port 40a. This permits the water supply system HS to improve the drainage of the water circulating pump 22.

In step S15, the control unit 4 then performs control so as to stop the operation of the compressor 11. In step S16, the control unit 4 then performs control so that the first, second, third and seventh control valves 24, 25, 26 and 30 are opened, closed, closed and closed, respectively. In step S17, the control unit 4 then determines whether or not a predetermined time has elapsed. There is a sufficient time set for the predetermined time to discharge a certain amount of water remaining within the water circulating pump 22 and the filter 23 through the seventh control valve 30.

When the predetermined time has elapsed, in step S18, the control unit 4 then performs control so that the seventh control valve 30 is temporarily opened again. This control allows remaining water to be discharged within the predetermined time in step S17.

As described above, in the fuel-cell system FCS1, the control unit 4 controls the control valves 24, 25 and 26 so as to discharge water within the fuel-cell stack 1, the water circulating pump 22 and the filter 23, and then controls the seventh control valve 30 so as to completely discharge water remaining in the piping and the like near the water circulating pump 22 and the filter 23 via the discharge line 40.

### [Effect of first embodiment]

In the water supply system HS of the present invention, the discharge line 40 is connected to line 32 on the water discharge side of the water circulating pump 22 and open to the atmosphere, and the seventh control valve 30 is provided on the discharge line 40 at a position below the water circulating pump 22. When the system FCS1 is started, the parts/components in the system on the suction side of the water circulating pump 22 are pressurized higher than parts/components in the system on the water discharge side of the water circulating pump 22, with the seventh control valve 30 opened. Thus, priming water is supplied to the water circulating pump 22. When the system FCS1 is stopped, the seventh control valve 30 allows water in the water circulating pump 22 to be discharged therethrough, and this prevents priming water remaining within the seventh control valve 30 from reaching the water circulating pump 22, thereby reducing the possibility of malfunctioning, next time the system starts, caused by the freezing of water.

Further, according to the water supply system HS, the seventh control valve 30 can have both the function of reducing pressure on the discharge side of the water circulating pump 22 and thereby supplying priming at the time of commencing operation, and the function of discharging water at the time of stopping operation. Therefore, it is possible to reduce the number of control valves in the water supply system HS, thus contributing to simplification of the system configuration and saving cost.

Further, according to the water supply system HS, the system includes the discharge line 40 which is located below the position of the water circulating pump 22 as the discharge line 40 extends from the communication port 40a and approaches the position of the seventh control valve 30. This can facilitate discharging water within lines 32 and 33, the water circulating pump 22 and the filter 23.

Further, according to the water supply system HS, the discharge line 40 is connected to lines 32 and 33 on the water discharge side of the water circulating pump 22 at the position between the water outlet of the water circulating pump 22 and the filter 23. At the time of discharging water, this arrangement can avoid situations where hard-to-discharge water within the filter 23 flows into the water circulating pump 22.

Further, according to the water supply system HS, the filter 23 is located above the communication port 40a. This permits an improvement in the drainage of the filter 23.

Further, according to the water supply system HS, the compressor 11, which supplies air as the oxidant gas required for the fuel-cell stack 1 to generate power, can be used to apply pressure to parts/components in the system. Thus, a simple configuration can be used to achieve easy pressurization of the water storage tank 21 and the like.

Further, according to the water supply system HS, the supply of water to the fuel-cell stack 1 is started through the following procedure: air pressure supplied from the compressor 11 is applied to the water storage tank 21; the seventh control valve 30 is opened so that the parts/components in the system on the suction side of the water circulating pump 22 are pressurized higher than the parts/components in the system on the water discharge side thereof; and thereafter the water circulating pump 22 is driven. Thus, simple control can be performed to ensure that priming is supplied to the water circulating pump 22.

Further, according to the water supply system HS, the supply of water to the fuel-cell stack 1 is stopped through a procedure which involves introducing air pressure supplied from the compressor 11 into lines 34, 33 and 32, and then opening the seventh control valve 30. This enables to completely discharge not only water remaining within the fuel-cell stack 1, the water circulating pump 22 and the filter 23, but also water remaining in the piping and the like near the water circulating pump 22 and the filter 23.

The embodiment described above is illustrative and not restrictive, and the invention may be practiced or embodied in other ways without departing from the spirit or essential character thereof.

For example, the present invention may be applied to the case where moistening of the fuel-cell stack 1 is carried out indirectly by humidifying reactant gases supplied to the fuel-cell stack 1 with a humidifier, although the description has been given to the embodiment in which water is supplied directly to the fuel-cell stack 1 for moistening.

### [Second embodiment]

Next, the description is given with regard to a fuel-cell system FCS2 according to a second embodiment. The same parts/components as those of the first embodiment are designated by the same reference numerals and symbols, and thus the detailed description thereof is omitted.

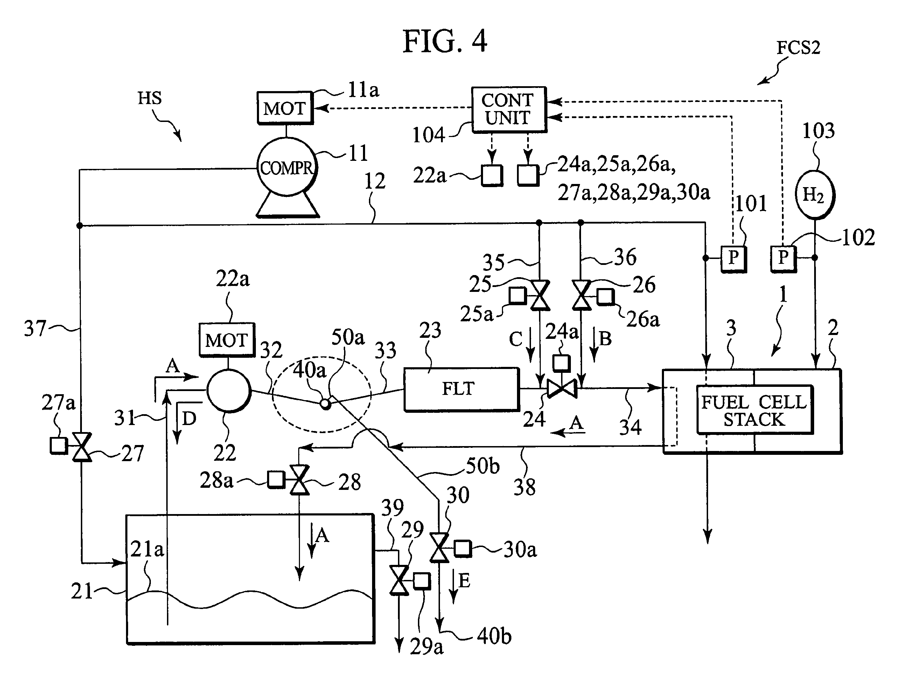

As shown in FIG. 4, the fuel-cell system FCS2 is different from the fuel-cell system FCS1 in that the discharge line 40 thereof is replaced with a discharge line 50 which has an ascending portion 50a arranged above the communication port 40a, and a descending portion 50b connected to the ascending portion 50a and arranged so that the descending portion 50b becomes lower as the descending portion 50b extends closer to the seventh control valve 30 from the point where the portions 50a and 50b are connected.

The fuel-cell system FCS2 according to the second embodiment having the above-described configuration stops the supply of water to the fuel-cell stack 1 in the same manner as the system of the first embodiment through the following procedure: air is introduced into the filter 23 and the water circulating pump 22 via the line 35; air pressure is used to recover to the water storage tank 21 water within the filter 23 and the water circulating pump 22; and then the seventh control valve 30 is opened so as to discharge water remaining in the piping and the like near the water circulating pump 22 and the filter 23.

In this case, under the control of the control unit 4 over the compressor 11, at the time of stopping the system, water remaining between the communication port 40a and the first control valve 24 is discharged in the direction indicated by arrow D of FIG. 4 and is recovered to the water storage tank 21 by using air pressure, while part of the water is sent toward the seventh control valve 30 via the ascending portion 50a and the descending portion 50b. Then, under the control of the control unit 4, water is recovered by using air pressure until the amount of water remaining reaches a sufficiently small amount relative to the volumetric capacities of lines 32 and 33, and then the seventh control valve 30 is opened so as to discharge water remaining in the descending portion 50b.

Some filters may require a long time for water to flow out according to the performance and capacity of the filter 23. In this case, water flows out of the filter 23 toward the communication port 40a, even when operation of the compressor 11 is stopped and water is discharged through the seventh control valve 30.

On the other hand, the fuel-cell system FCS2 according to the second embodiment includes the discharge line 50 having the ascending portion 50a located above the communication port 40a. Thus, water flowing out of the filter 23 after the compressor 11 is stopped, is stored in the line near the communication port 40a and the ascending portion 50a. This allows the fuel-cell system FCS2 to prevent water from flowing out of the filter 23 into the seventh control valve 30.

After using the compressor 11 to recover water in lines 32 and 33 to the water storage tank 21 and discharge water through the seventh control valve 30, the fuel-cell system FCS2 according to the second embodiment can therefore hold water flowing out of the filter 23 near the communication port 40a and the ascending portion 50a without water remaining in the seventh control valve 30. Therefore, the fuel-cell system FCS2 can prevent freezing of the seventh control valve 30 resulting from water remaining in the filter 23 within the seventh control valve 30. Thus, the system FCS2 can prevent situations where the seventh control valve 30 cannot operate next time the system starts. In other words, the fuel-cell system FCS2 does not create situations where water remaining in the filter 23 flows into a minute space in the seventh control valve 30 and becomes frozen.

In the fuel-cell system FCS2, water is removed from the system by using compressed air, and the amount of water remaining in the system becomes sufficiently small relative to the capacities of lines 32 and 33, at the time of the stopping the system. Therefore, even in a case that water flows out of the filter 23 and freezes in lines 32 and 33 after the system has stopped, water can flow through and circulate in the system next time the system starts. The level of the connecting point between the ascending portion 50a and the descending portion 50b relative to the communication port 40a is set to a level that water flowing out of the filter 23 when the seventh control valve 30 is opened again after stopping the compressor 11, can be dammed and prevented from flowing into the seventh control valve 30 after the system is stopped. In other words, the level of the connecting point is set so that the capacity for holding water of the piping upstream the connection point, such as lines 32 and 33, is set at least to the amount of water flowing out of the filter 23, which depends on the capacities of the filter 23.

With a discharge line which includes a first line located below the communication port 40a and connected to the communication port 40a, a second line partly located above the first line and connected to the first line, and a third line located below the second line and connected to the seventh control valve 30 , all of water flowing out of the filter 23 may be gathered at the position where the first line is connected to the second line. This may cause water to become frozen inside the piping and result in the incapability of water circulation. On the other hand, the fuel-cell system FCS2 according to the second embodiment includes the ascending portion 50a located above the communication port 40a and connected to the communication port 40a, and therefore the system FCS2 can distribute water flowing out of the filter 23 among the ascending portion 50a and the lines 32 and 33, so that the system FCS2 can prevent water clogging due to freezing.

Even when a filter which requires a long time for water to flow out of is used as the filter 23, the fuel-cell system FCS2 can prevent water from freezing in the seventh control valve 30. Therefore the system FCS2 can prevent the seventh control valve 30 from freezing, for example even when the time taken for the compressor 11 to be driven in order to eliminate water within the filter 23 (the predetermined time set in step S13 of FIG. 3) and the time taken for the seventh control valve 30 to be opened (the predetermined time set in step S17 of FIG. 3) is short.

### [Third embodiment]

Next, the description will be given with regard to a fuel-cell system FCS3 according to a third embodiment. The same parts/components as those of the above-mentioned embodiments are designated by the same reference numerals and symbols, and thus the detailed description thereof will be omitted.

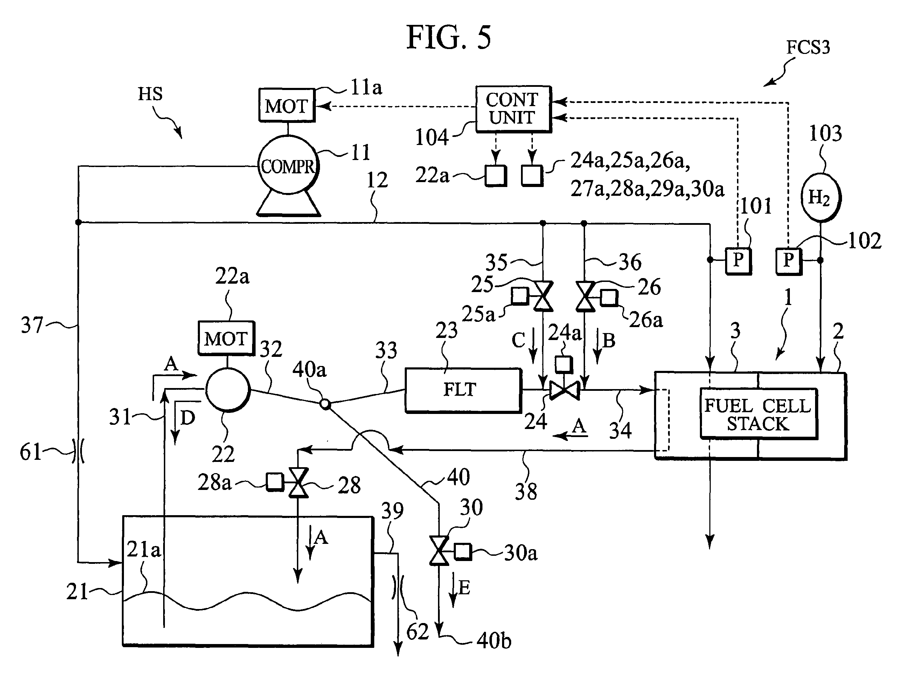

As shown in FIG. 5, the fuel-cell system FCS3 according to the third embodiment is different from the fuel-cell system FCS1 according to the first embodiment in that the fourth control valve 27 is replaced by a first orifice 61 and the sixth control valve 29 is replaced by a second orifice 62.

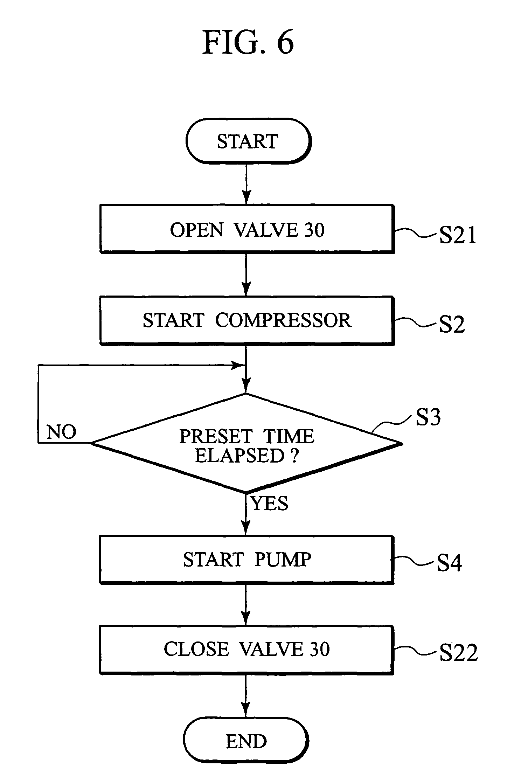

The fuel-cell system FCS3 having the above-described configuration operates in the following manner. As shown in FIG. 6, at the time of starting the system, the control unit 4 performs control so that only the seventh control valve 30 is opened (step S21) and the compressor 11 is driven (step S2). Thus, in the fuel-cell system FCS3, air is introduced from the compressor 11 into the water storage tank 21, and thus, pressure is increased in the water storage tank 21 through the action of the first and second orifices 61 and 62.

When determination is made that the predetermined time has elapsed, more specifically, when determination is made that pressure in the water storage tank 21 is higher than pressure in parts/components in the system on the water discharge side of the water circulating pump 22 and thus priming reaches the water circulating pump 22 (step S3), the control unit 4 then performs control so that the water circulating pump 22 is started (step S4) so as to close the seventh control valve 30 (step S22). This allows the fuel-cell system FCS3 to start circulating water through the fuel-cell stack 1.

To supply priming to the water circulating pump 22 at the time of starting the system, the fuel-cell system FCS3 according to the third embodiment configured as described above can perform simple control to start the system without electrically controlling the opening and closing of the valves, as compared to the fuel-cell system FCS1 according to the first embodiment. Moreover, the fuel-cell system FCS3 has a lesser number of mechanical moving parts such as an actuator or the like for providing a valve driving torque, thus contributing to the simplification of the system configuration and cost reduction.

The preferred embodiments described herein are illustrative and not restrictive, and the invention may be practiced or embodied in other ways without departing from the spirit or essential character thereof. The scope of the invention being indicated by the claims, and all variations which come within the meaning of claims are intended to be embraced herein.

The present disclosure relates to subject matters contained in Japanese Patent Application No. 2003-163524, filed on June 9, 2003, and Japanese Patent Application No. 2003-348391, filed on October 7, 2003, the disclosures of which are expressly incorporated herein by reference in their entirety.

## Claims

1. A water supply system for a fuel cell comprising:
a tank (21) for storing water;
a pump (22) located above a water level in the tank (21), for supplying water to the fuel cell (1);
a first passage (32) from the pump (22)to the fuel cell (1), the first passage (32) having a first portion placed in a position below a discharge port of the pump (22);
an air supplying device (11) for supplying air to the tank (21) and the first passage (32);
a second passage (33) connected at one end thereof to the first portion of the first passage (32) and opened to the atmosphere at the other end thereof;
a valve (30) provided on the second passage (33), for discharging water remaining within at least either the pump (22) or the first passage (32) through the second passage (33); and
a controller (4) for controlling the valve (30),
wherein the controller (4) opens the valve (30) as the water supply to the fuel cell (1) is stopped.

2. The water supply system for a fuel cell according to claim 1,
wherein the second passage (33) is arranged to become lower as the second passage (33) extends from the end thereof connected to the first portion of the first passage (32) to the valve (30).

3. The water supply system for a fuel cell according to claim 1, further comprising:
a filter (23) provided on the first passage (32),
wherein the second passage (33) is connected to the first passage (32) between the pump (22) and the filter (23).

4. The water supply system for a fuel cell according to claim 3,
wherein the filter (23) is located at a position higher than a point at which the second passage (33) is connected to the first passage (32).

5. The water supply system for a fuel cell according to claim 1,
wherein the air supplying device (11) supplies air to the fuel cell (1) as an oxidant gas.

6. The water supply system for a fuel cell according to claim 1,
wherein the controller (4) controls the valve (30), the pump (22) and the air supplying device (11), and
wherein the controller (4) has the air supplying device (11) supply air to the tank (21) to pressurize the tank (21) and opens the valve (30), before starting the pump (22) to supply water to the fuel cell (1).

7. The water supply system for a fuel cell according to claim 1,
wherein the controller (4) controls the valve (30), the pump (22) and the air supplying device (11), and
wherein, after stopping the pump (22), the controller (4) has the air supplying device (11) supply air to the first passage (32) and then opens the valve (30).

8. The water supply system for a fuel cell according to claim 1,
wherein the second passage (33) has a second portion located at a position higher than a point at which the second passage (33) is connected to the firstportion of the first passage (32), and a third portion arranged to become lower as the third portion extends closer to the valve (30).

9. The water supply system for a fuel cell according to claim 1,
wherein the tank (21) has an air supply line (37) and an air discharge line (39) connected thereto, the air supplying device (11) supplying air to the tank (21) through the air supply line (37), and at least one of the air supply line (37) and the air discharge line (39) has an orifice (61, 62) provided thereon, and
wherein the controller (4) controls the valve (30), the pump (22) and the air supplying device (11), and the controller (4) has the air supplying device (11) supply air to the tank (21) to pressurize the tank (21) and opens the valve (30), before starting the pump (22) to supply water to the fuel cell (1).
